# EUROPÄISCHE PATENTSCHRIFT

(11) **EP 1 818 567 B1**
(45) Veröffentlichungstag und Bekanntmachung des Hinweises auf die Patenterteilung: **08.01.2014**
(21) Anmeldenummer: 06002704.2
(22) Anmeldetag: 10.02.2006
(51) Int. Cl.: F16G 1/28, F16G 1/06, C08L 75/04

(54) **Antriebsriemen**
Drive belt
Courroie d'entrainement

(43) Veröffentlichungstag der Anmeldung: 15.08.2007
(73) Patentinhaber: ContiTech Antriebssysteme GmbH, 30165 Hannover (DE)
(72) Erfinder: Kanzow, Henning, Dr., 30519 Hannover (DE); Mahnken, Claus-Lüder, 27367 Ahausen (DE); Teves, Reinhard, Dr., 30926 Seelze (DE)
(74) Vertreter: Fornefett, Iris

(56) Entgegenhaltungen:
- EP-A- 0 662 571
- EP-B- 1 088 177
- WO-A-96/02584
- WO-A-03/023254
- DE-C- 10 108 165

## Beschreibung

Die Erfindung betrifft einen Antriebsriemen aus Gummi mit einer Oberflächenarmierung, die polyamid- und/oder polyesterhaltige textile Festigkeitsträger enthält und auf der Außenseite eine Oberflächenbeschichtung aus die Reibung verminderndem Material in einer Matrix aus zumindest einem elastischen Polyaddukt aufweist.

Bei den polyamid- und/oder polyesterhaltigen textilen Festigkeitsträgern kann es sich sowohl um Festigkeitsträger auf der Basis von aliphatischen Polyamiden (z. B. Nylon) oder Polyestern als auch um solche auf der Basis von aromatischen Polyamiden (z. B. Aramid) oder Polyestern handeln. Bei der Oberflächenarmierung kann es sich z. B. um Nylon-, Polyester oder Mischgewebe aus beiden handeln.

Polyaddukte sind durch Polyaddition hergestellte Polymere, deren wichtigste Vertreter Polyurethane und Polyharnstoffe sind. Polyurethane werden durch Addition von Diisocyanaten an Polyole hergestellt, während bei den Polyharnstoffen Diisocyanate über eine Additionsreaktion mit Polyaminen verknüpft werden.

Eingangs genannte Antriebsriemen und Verfahren zu deren Herstellung sind aus der EP 1 088 177 A1 und der EP 0 662 571 A1 bekannt. In diesen Schriften werden Zahnriemen beschrieben, die ein Gewebe auf den Zähnen aufweisen, welches mit einer reibungsreduzierenden Oberflächenbeschichtung versehen ist. Bei der Oberflächenbeschichtung handelt es sich um eine Polymermatrix (Bindemittelmatrix aus Polyurethan, einem Polyaddukt), in die Polytetrafluorethylen eingebettet ist. Gemäß der EP 1 088 177 A1 wird als Oberflächenbeschichtung eine abriebresistente Zusammensetzung von der Firma Whitford Plastics Limited vorgeschlagen, die unter dem Namen XYLAN® erhältlich ist. Zur Bildung der Beschichtung werden dabei XYLAN® 1642-A-1429 (Gemisch aus kurz- und mittelkettigen Diolen und Polyester-Polyolen mit kurzen und mittleren Kohlenstoffketten (1 - 6 C-Atome) zwischen den Polyolbausteinen mit PTFE in organischem Lösemittel) und XYLAN® 1642-B-1452 (Hexamethylendiisocyanat-Präpolymer mit PTFE in organischem Lösemittel) zusammengegeben und auf die Außenseite des Zahngewebes aufgebracht.
Es hat sich aber herausgestellt, dass die Riemen mit den Oberflächenbeschichtungen aus XYLAN® zwar hinsichtlich des Verschleißschutzes und des Reibungsverhaltens deutlich verbessert sind, aber beim Einsatz in sehr hohen Temperaturbereichen oberhalb von 130 °C durch Zahnabscherung verfrüht ausfallen können.

In der Offenlegungsschrift WO 96/02584 A1 wird ein Zahnriemen beschrieben, der aus einer festen Polyurethan/Harnstoff Elastomerzusammensetzung gebildet wird, wobei diese Zusammensetzung bei Anwendungen mit dynamischer Belastung eine Hochtemperaturbeständigkeit bis 140 °C und eine Tieftemperaturbeständigkeit bis -35 °C aufweist. Der Zahnriemen ist mit einer Oberflächenarmierung (Zahnauflage) versehen.

Der Erfindung liegt daher die Aufgabe zu Grunde, Antriebsriemen aus Gummi bereitzustellen, die sich durch eine verbesserte Hitzebeständigkeit, d. h. eine höhere Lebensdauer bei Nutzung unter hohen Temperaturen, bei gutem Verschleißschutz auszeichnen.

Gelöst wird diese Aufgabe erfindungsgemäß dadurch, dass bei einem Riemen der eingangs genannten Art das elastische Polyaddukt weniger als 2 Gew.-%, bezogen auf das Polymer, an Strukturbausteinen -O-CₓR_{y}-O- mit x = 1 - 3 und y = 0 - 6 aufweist, wobei die R in einem Strukturbaustein gleich oder verschieden sein können und ausgewählt sind aus Wasserstoff oder kohlenstoffhaltigen Gruppen.

Es wurde gefunden, dass bei weitgehendem Verzicht auf die üblicherweise in den bekannten Oberflächenbeschichtungen vorliegenden -O-CₓR_{y}-O- Gruppierungen mit x = 1 - 3, die aus den Edukten des Polyadduktes, wie z. B. 1,2-Propandiol, 1,2-Propendiol, Ethandiol und Polyesterpolyolen mit kurzen Kohlenstoffketten des Diolbausteins, durch Addition an Diisocyanate entstehen, die Hitzebeständigkeit der Riemen deutlich verbessert werden kann. Bei Einsatztemperaturen von mehr als 130 °C mit Spitzen bis zu 170 °C fielen die Riemen deutlich später mit Zahnabscherungen aus. Gleichzeitig bleibt aber der übliche Verschleißschutz für das Gewebe und damit des Riemens durch die Anwesenheit der Oberflächenbeschichtung auf der Außenseite des Gewebes erhalten.

Der beobachtete Effekt könnte darin begründet liegen, dass es bei besonders hohen Temperaturen zu Spaltungsreaktionen in den Polyaddukten innerhalb der Oberflächenbeschichtung kommen könnte, wobei kurzkettige Bruchstücke, wie z. B. Propandiol oder Ethandiol entstehen. Diese haben sich - vermutlich auf Grund ihrer Polarität - als schädlich für die Polyamid- und/oder Polyesterfestigkeitsträger der Oberflächenarmierung erwiesen, so dass die Festigkeitsträger z. T. anquellen, wodurch es zu einem Festigkeitsverlust kommt.
Bei der Matrix aus zumindest einem elastischen Polyaddukt kann es sich z. B. um eine Polyurethan-, eine Polyharnstoff- oder eine Mischmatrix aus beiden handeln. Das Polyaddukt wird dabei gebildet aus einem Diisocyanat, z. B. 2,4- bzw. 2,6-Toluoldiisocyanat (TDI), 4,4'- Methylendi(phenylisocyanat) (MDI), 4,4'-Methylendicyclohexylisocyanat (HMDI) oder Hexamethylendiisocyanat (HDI), bzw. einem entsprechenden Präpolymer aus Diisocyanat und einem Polyol, z. B. 1,6-Hexandiol oder einem Polyesterpolyol, für Polyurethan oder einem Polyamin für Polyharnstoff.

Als besonders vorteilhaft im Hinblick auf die Hitzebeständigkeit des Riemens hat es sich erwiesen, wenn das elastische Polyaddukt weniger als 0,5 Gew.-%, bezogen auf das Polymer, an Strukturbausteinen -O-CₓR_{y}-O- mit x = 1 - 3 aufweist, da dann die möglicherweise durch thermische Zersetzung entstehenden und für die Festigkeitsträger schädlichen kurzkettigen Diole weiter reduziert werden.

Gemäß einer Ausgestaltung der Erfindung handelt es sich bei dem elastischen Polyaddukt um ein Polyurethan, welches auf Polyolen mit der Struktur -O-CₓR_{y}-O- mit 4 ≤ x ≤ 20 und y = 0 - 40, vorzugsweise mit x = 6, basiert, wobei die R in einem Strukturbaustein gleich oder verschieden sein können und ausgewählt sind aus Wasserstoff oder kohlenstoffhaltigen Gruppen. So kann beispielsweise 1,6-Hexandiol als Edukt des Polyadduktes eingesetzt werden.

Gemäß einer alternativen Ausgestaltung der Erfindung kann es sich bei dem elastischen Polyaddukt auch um einen Polyharnstoff handeln. Kurzkettige Diole, die die Festigkeitsträger schädigen, können bei der thermischen Zersetzung von Polyharnstoffen nicht frei werden.

Um jegliche kurzkettigen polaren Verbindungen durch thermische Zersetzung auszuschließen, ist das elastische Polyaddukt vorzugsweise ein Polyharnstoff, der auf Polyaminen mit der Struktur -NR²-CₓR¹_{y}-NR²- mit x ≥ 4 und y ≥ 0 basiert, wobei die R¹ und R² in einem Strukturbaustein gleich oder verschieden sein können und ausgewählt sind aus Wasserstoff oder kohlenstoffhaltigen Gruppen.

Die Matrix kann aber auch eine Mischmatrix aus Polyurethan und Polyharnstoff sein, wichtig ist nur, dass der Anteil an Strukturbausteinen -O-CₓRy-O- mit x = 1 - 3 in den entsprechenden Polymerketten kleiner als 2 Gew.-% ist.

Bei dem in der Matrix der Oberflächenbeschichtung vorhandenen, die Reibung vermindernden Material kann es sich um unterschiedliche Substanzen wie z. B. Graphit, Kurzfasern oder Fluorpolymere auch im Gemisch handeln. Mit Fluorpolymeren, vorzugsweise mit Polytetrafluorethylen, wurden die besten Ergebnisse hinsichtlich der Reibungsoptimierung und der Geräuschreduzierung erzielt.

Das die Reibung vermindernde Material liegt in der Matrix bevorzugt in Mengen von 40 bis 60 Gew.-% vor, um gute Reibungseigenschaften bei guter Biegewilligkeit des Riemens und guter Anbindung des reibungsvermindernden Materials an den Riemen zu erzielen.

Die Oberflächenbeschichtung kann weitere Substanzen wie z. B. Farbstoffe, leitfähige Ruße, Verdickungsmittel (z. B. Cellulose-acetobutyrat) oder Füllstoffe enthalten.

Bei dem erfindungsgemäßen Antriebsriemen kann es sich z. B. um Keilriemen oder Keilrippenriemen mit einer Oberflächenarmierung auf dem Rücken oder auf den Rippen des Riemens handeln. Bevorzugt handelt es sich bei dem Riemen allerdings um einen Zahnriemen, dessen Zähne eine Oberflächenarmierung mit einer Oberflächenbeschichtung auf der Außenseite aufweisen. Bei den Zahnriemen bietet die Oberflächenbeschichtung aus die Reibung verminderndem Material in einer Matrix aus zumindest einem elastischen Polyaddukt einen optimalen Schutz des Gewebes auf den Stegen zwischen den Riemenzähnen vor den Zähnen der Riemenscheibe. Das Gewebe auf den Zahnstegen des Riemens ist vor einem Durchreiben geschützt und die umgebenden Riemenzähne bleiben durch das intakte Gewebe stabil. Gleichzeitig kommt des durch den geringen Anteil der kurzkettigen Strukturbausteine -O-CₓR_{y}-O- mit x = 1 - 3 im elastischen Polyaddukt zu einer guten Hitzebeständigkeit des Riemens. Es kommt nicht verfrüht zu Zahnabscherungen und die Lebensdauer des Riemens bei Nutzung unter hohen Temperaturen kann deutlich gesteigert werden.

Die Oberflächenarmierung auf den Riemenzähnen des Zahnriemens kann Polyamid- und/oder Polyesterfestigkeitsträger enthalten, die in der Regel zur besseren Haftung am Riemenkörper aus Gummi mit einer Haftimprägnierung, z. B. einem RFL-Dip, versehen sind. Vorzugsweise handelt es sich jedoch um ein Polyamid-6.6-Stretchgewebe, welches sich gut bei der Zahnriemenherstellung verarbeiten lässt und einen guten Schutz vor Verschleiß bei geringem Geräusch bietet.

Um eine ausreichende Haftung der Oberflächenarmierung am Riemenkörper zu gewährleisten, hat es sich als vorteilhaft erwiesen, wenn die Oberflächenbeschichtung die Oberflächenarmierung zu höchstens ¾ der Lagendicke der Oberflächenarmierung, in der Regel ein Gewebe, durchdringt.

Für einen besonders guten Schutz vor Steggewebeverschleiß ist das Gewebe im Stegbereich der Riemenzähne der Zahnriemen mit 50 bis 600 g/m², vorzugsweise mit 150 bis 400 g/m², Oberflächenbeschichtung versehen. Das Gewicht an Oberflächenbeschichtung bezieht sich dabei auf das trockene Gewebe und die getrocknete Oberflächenbeschichtung.

Die erfindungsgemäßen Antriebsriemen können nach dem Fachmann bekannten Verfahren, wie sie beispielsweise in der EP 1 088 177 B1 beschrieben sind, hergestellt werden. Das Gewebe für die Oberflächenarmierung wird dabei üblicherweise vor dem Auflegen auf die Riemenaufbautrommel mit einer Haftimprägnierung versehen, anschließend wird auf die Gewebeseite, die mit dem Riemengummi in Kontakt kommt, eine Paste aus einer vulkanisierbaren Kautschukmischung in einem organischen Lösemittel gestrichen und schließlich wird die Seite des Gewebes, die die Außenseite des Riemens bildet, mit einer Paste, die das reibungsvermindernde Material und die Edukte des die Matrix bildenden elastischen Polyadduktes in organischem Lösungsmittel, z. B. in 50 % Xylol, aufweist, bestrichen. Nach Trocknung wird das Gewebe in üblicher Weise beim Bau des Riemenwickels eingesetzt. Der Wickelrohling wird vulkanisiert und auf die gewünschte Breite geschnitten.

Im Folgenden wird die Erfindung anhand von Ausführungsbeispielen und der nachstehenden Figur näher erläutert, ohne jedoch auf diese Beispiele beschränkt zu sein.

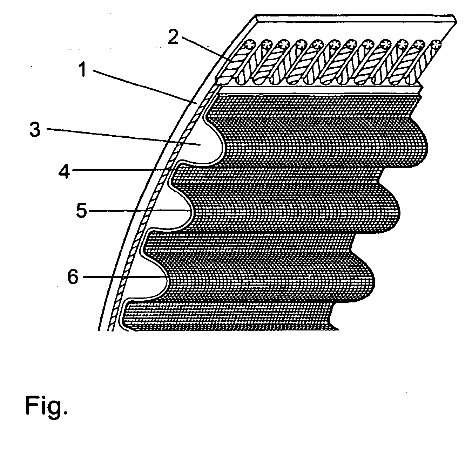

Die einzige Figur zeigt schematisch den Querschnitt eines erfindungsgemäßen Antriebsriemens.

In der Figur ist schematisch ein erfindungsgemäßer Antriebsriemen in Form eines Zahnriemens dargestellt, der eine elastomere Decklage 1, eine Zugträgerlage 2 aus parallel verlaufenden Festigkeitsträgercorden und Riemenzähne 3 aus elastomerem Material mit dazwischen liegenden Zahnstegen 4 aufweist. Die Zahnseite des Riemens, d. h. die Riemenzähne 3 und Riemenstege 4, sind mit einer Oberflächenarmierung 5 in Form eines Gewebes versehen. Auf der Außenseite weist das Gewebe der Oberflächenarmierung 5 eine Oberflächenbeschichtung 6 auf.

Es wurden drei Gummizahnriemen auf HNBR-Basis mit einer Zugträgerlage aus Glascorden und einem Polyamid-6.6-Stretchzahngewebe hergestellt. Das Zahngewebe war in allen Fällen mit einem RFL-Dip auf der Basis von CSM ausgerüstet, dann wurde das Gewebe mit einem Haftmittel, genannt Overcoat, gedippt und an der Gummiseite mit einer Paste aus HNBR-Kautschukmischung in organischem Lösemittel bestrichen. Die Behandlung der Gewebeseite, die die Zahnaußenseite bildet, wurde jedoch bei den drei Riemen unterschiedlich vorgenommen. Nach der Trocknung aller auf das Gewebe aufgebrachten Schichten, wurde das Gewebe in üblicher Weise beim Riemenbau eingesetzt.
Beim Vergleichsriemen A wurde das Gewebe auf der Zahnseite mit keiner weiteren Beschichtung versehen.
Beim Vergleichsriemen B wurde das Gewebe auf der Zahnseite mit XYLAN® (Produkt aus XYLAN® 1642-A-1429 und XYLAN® 1642-B-1452) der Firma Whitford versehen. Das XYLAN® besteht neben PTFE-Pulver (ca. 25 Gew.-%) und einem Lösemittelgemisch (ca. 50 Gew.-%) aus den polyurethanbildenden Komponenten Diisocyanat und einer Mischung aus kurz- und mittelkettigen Diolen, im Wesentlichen 1,2-Propandiol, Ethandiol und 1,6-Hexandiol, und Polyester-Polyolen mit kurzen und mittleren -O-CₓR_{y}-O-Bausteinen.
Beim erfindungsgemäßen Riemen C wurde das Gewebe auf der Zahnseite mit einem XYLAN-analogen Gemisch behandelt, das bezüglich der Komponenten und Konzentrationen bis auf die Diol- und Polyolkomponenten gleich aufgebaut war. Die Mischung aus kurz- und mittelkettigen Diolen und Polyester-Polyolen mit kurzen und mittleren -O-CₓR_{y}-O- Bausteinen wurde durch reines 1,6-Hexandiol und Polyester-Polyol mit dem Baustein -O-C₆H₁₂-O- ersetzt.

Die drei Riemen wurden hinsichtlich ihrer Lebensdauer bei sehr hoher Einsatztemperatur (170 °C) und des Steggewebeverschleißes bei Raumtemperatur untersucht. Für die Lebensdauerbestimmung bei sehr hoher Temperatur wurden die Riemen auf einem elektrisch geschleppten Komponentenprüfstand bei 170 °C Umgebungstemperatur und 4000 U/min getestet. Für den Steggewebeverschleiß wurden die Riemen auf demselben Prüfstand bei Raumtemperatur bei einer Umlauffrequenz getestet, bei der die höchsten Trumkräfte auftreten. Durch die Variation der Umlauffrequenz werden also die auf die Riemen einwirkenden Kräfte drastisch erhöht und die Stege des Riemens werden dadurch stark beansprucht. Tabelle 1 zeigt die Ergebnisse der Untersuchungen.

**Tabelle 1**

| | Riemen A | Riemen B | Riemen C |
|---|---|---|---|
| Laufzeit bis zum Ausfall durch Zahnabscherung bei T=170°C | 70 h | 50 h | 67 h |
| durchschnittliche Laufzeit bei RT bis ein deutliches Verschleißbild auf den Stegen auftritt | 90 h | 330 h | 330 h |

Aus der Tabelle 1 wird ersichtlich, dass nur mit der Oberflächenbeschichtung ohne die kurzkettigen Bausteine -O-CₓR_{y}-O- mit x = 1 - 3 und y = 0 - 6 eine hohe Lebensdauer bei hohen Temperaturen erreicht werden kann, ohne dass der Steggewebeverschleiß inakzeptabel wird.

Zusätzlich wurde das für die Riemenfertigung präparierte Gewebe untersucht. Die Gewebe für die Riemen B und C wurden drei Tage bei 150 und 170 °C gelagert und die Reißdehnung (Zugversuch gemäß DIN EN ISO 13934-1) in Schussrichtung bei Raumtemperatur bestimmt. Die Ergebnisse zeigt Tabelle 2.

**Tabelle 2**

| | Gewebe B | Gewebe C |
|---|---|---|
| Reißdehnung, 3 Tage, 150 °C | 97 % | 152 % |
| Reißdehnung, 3 Tage, 170 °C | 8 % | 98 % |

Das Gewebe C weist die für Riemen gewünschte hohe Reißdehnung auch nach Einwirkung hoher Temperaturen auf, während das Gewebe B in Anwesenheit der XYLAN-Beschichtung bei hohen Temperaturen deutlich versprödet und keine ausreichende Festigkeit zur Stabilisierung der Riemenzähne zeigt.

## Patentansprüche

1. Antriebsriemen aus Gummi mit einer Oberflächenarmierung (5), die polyamid- und/oder polyesterhaltige textile Festigkeitsträger enthält und auf der Außenseite eine Oberflächenbeschichtung (6) aus die Reibung verminderndem Material in einer Matrix aus zumindest einem elastischen Polyaddukt aufweist,
**dadurch gekennzeichnet, dass**
das elastische Polyaddukt weniger als 2 Gew.-%, bezogen auf das Polymer, an Strukturbausteinen -O-CₓR_{y}-O- mit x = 1 - 3 und y = 0 - 6 aufweist, wobei die R in einem Strukturbaustein gleich oder verschieden sein können und ausgewählt sind aus Wasserstoff oder kohlenstoffhaltigen Gruppen.

2. Antriebsriemen nach Anspruch 1, **dadurch gekennzeichnet, dass** das elastische Polyaddukt weniger als 0,5 Gew.-%, bezogen auf das Polymer, an Strukturbausteinen-O-CₓR_{y}-O- mit x = 1 - 3 aufweist.

3. Antriebsriemen nach Anspruch 1 oder 2, **dadurch gekennzeichnet, dass** das elastische Polyaddukt ein Polyurethan ist, welches auf Polyolen mit der Struktur -O-CₓR_{y}-O- mit 4 ≤ x ≤ 20 und y = 0 - 40 basiert, wobei die R in einem Strukturbaustein gleich oder verschieden sein können und ausgewählt sind aus Wasserstoff oder kohlenstoffhaltigen Gruppen.

4. Antriebsriemen nach Anspruch 3, **dadurch gekennzeichnet, dass** das elastische Polyaddukt ein Polyurethan ist, welches auf Polyolen mit der Struktur -O-CₓR_{y}-O- mit x = 6 basiert.

5. Antriebsriemen nach Anspruch 1 oder 2, **dadurch gekennzeichnet, dass** das elastische Polyaddukt ein Polyharnstoff ist.

6. Antriebsriemen nach Anspruch 5, **dadurch gekennzeichnet, dass** das elastische Polyaddukt ein Polyharnstoff ist, welcher auf Polyaminen mit der Struktur -NR²-CₓR¹_{y}-NR² - mit x ≥ 4 und y ≥ 0 basiert, wobei die R¹ und R² in einem Strukturbaustein gleich oder verschieden sein können und ausgewählt sind aus Wasserstoff oder kohlenstoffhaltigen Gruppen.

7. Antriebsriemen nach Anspruch 1 oder 2, **dadurch gekennzeichnet, dass** die Matrix aus zumindest einem elastischen Polyaddukt Polyurethan und Polyharnstoff enthält.

8. Antriebsriemen nach zumindest einem der vorhergehenden Ansprüche, **dadurch gekennzeichnet, dass** das die Reibung vermindernde Material ein Fluorpolymerpulver ist.

9. Antriebsriemen nach Anspruch 8, **dadurch gekennzeichnet, dass** das Fluorpolymer Polytetrafluorethylen ist.

10. Antriebsriemen nach zumindest einem der vorhergehenden Ansprüche, **dadurch gekennzeichnet, dass** das die Reibung vermindernde Material in der Matrix in Mengen von 40 bis 60 Gew.-% vorliegt.

11. Antriebsriemen nach zumindest einem der vorhergehenden Ansprüche, **dadurch gekennzeichnet, dass** der Riemen ein Gummizahnriemen ist.

12. Antriebsriemen nach Anspruch 11, **dadurch gekennzeichnet, dass** die Oberflächenarmierung (5) ein Polyamid-6.6-Stretchgewebe auf den Riemenzähnen ist.

13. Antriebsriemen nach Anspruch 12, **dadurch gekennzeichnet, dass** das Gewebe im Stegbereich der Riemenzähne mit 50 bis 600 g/m², vorzugsweise 150 bis 400 g/m², Oberflächenbeschichtung (6) versehen ist.

## Claims

1. Drive belt made of rubber with a surface reinforcement (5) which comprises polyamide- and/or polyester-containing textile reinforcement materials and has, on the external side, a surface coating (6) made of friction-reducing material in a matrix made of at least one resilient polyadduct,
**characterized in that**
the resilient polyadduct comprises, based on the polymer, less than 2% by weight of -O-CₓR_{y}-O- structural units where x = from 1 to 3 and y = from 0 to 6, where the R in a structural unit can be identical or different and are selected from hydrogen and carbon-containing groups.

2. Drive belt according to Claim 1, **characterized in that** the resilient polyadduct comprises, based on the polymer, less than 0.5% by weight of -O-CₓR_{y}-O-structural units where x = from 1 to 3.

3. Drive belt according to Claim 1 or 2, **characterized in that** the resilient polyadduct is a polyurethane which is based on polyols having the structure -O-CₓR_{y}-O- where 4 ≤ x ≤ 20 and y = from 0 to 40, where the R in a structural unit can be identical or different and are selected from hydrogen and carbon-containing groups.

4. Drive belt according to Claim 3, **characterized in that** the resilient polyadduct is a polyurethane which is based on polyols with the structure -O-CₓR_{y}-O- where x = 6.

5. Drive belt according to Claim 1 or 2, **characterized in that** the resilient polyadduct is a polyurea.

6. Drive belt according to Claim 5, **characterized in that** the resilient polyadduct is a polyurea which is based on polyamines having the structure -NR²-CₓR¹_{y}-NR²-where x ≥ 4 and y ≥ 0, where the R¹ and R² in a structural unit can be identical or different and are selected from hydrogen and carbon-containing groups.

7. Drive belt according to Claim 1 or 2, **characterized in that** the matrix made of at least one resilient polyadduct comprises polyurethane and polyurea.

8. Drive belt according to at least one of the preceding claims, **characterized in that** the friction-reducing material is a fluoropolymer powder.

9. Drive belt according to Claim 8, **characterized in that** the fluoropolymer is polytetrafluoroethylene.

10. Drive belt according to at least one of the preceding claims, **characterized in that** the friction-reducing material is present in the matrix in amounts of from 40 to 60% by weight.

11. Drive belt according to at least one of the preceding claims, **characterized in that** the belt is a toothed rubber belt.

12. Drive belt according to Claim 11, **characterized in that** the surface reinforcement (5) is a stretch nylon-6,6 textile on the teeth of the belt.

13. Drive belt according to Claim 12, **characterized in that** in the region between the teeth of the belt the textile has from 50 to 600 g/m² of a surface coating (6), preferably from 150 to 400 g/m².

## Revendications

1. Courroie d'entraînement en caoutchouc, dotée d'une armature de surface (5) qui contient des renforts textiles contenant du polyamide et/ou du polyester, et qui présente sur son côté extérieur un revêtement de surface (6) en un matériau réduisant le frottement, incorporé dans une matrice constituée d'au moins un produit élastique de polyaddition,
**caractérisée en ce que**
le produit élastique de polyaddition présente par rapport au polymère moins de 2 % en poids de motifs de structure -O-CₓR_{y}-O- avec x = 1-3 et y = 0-6, les R d'un motif structurel pouvant être identiques ou différents et étant sélectionnés parmi l'hydrogène et les groupes carbonés.

2. Courroie d'entraînement selon la revendication 1, **caractérisée en ce que** le produit élastique de polyaddition présente par rapport au polymère moins de 0,5 % en poids de motifs de structure -O-CₓR_{y}-O- avec x = 1-3.

3. Courroie d'entraînement selon les revendications 1 ou 2, **caractérisée en ce que** le produit élastique de polyaddition est un polyuréthane à base de polyols de structure -O-CₓR_{y}-O- avec 4 ≤ x ≤ 20 et y = 0-40, les R d'un motif structurel pouvant être identiques ou différents et étant sélectionnés parmi l'hydrogène et les groupes carbonés.

4. Courroie d'entraînement selon la revendication 3, **caractérisée en ce que** le produit élastique de polyaddition est un polyuréthane à base de polyols de structure -O-CₓR_{y}-O- avec x = 6.

5. Courroie d'entraînement selon les revendications 1 ou 2, **caractérisée en ce que** le produit élastique de polyaddition est une polyurée.

6. Courroie d'entraînement selon la revendication 5, **caractérisée en ce que** le produit élastique de polyaddition est une polyurée à base de polyamines de structure -NR²-CₓR¹_{y}-NR²- avec x ≥ 4 et y ≥ 0, R¹ et R² d'un motif structurel pouvant être identiques ou différents et étant sélectionnés parmi l'hydrogène et les groupes carbonés.

7. Courroie d'entraînement selon les revendications 1 ou 2, **caractérisée en ce que** la matrice en au moins un produit élastique de polyaddition contient du polyuréthane et de la polyurée.

8. Courroie d'entraînement selon l'une des revendications précédentes, **caractérisée en ce que** le matériau réduisant le frottement est une poudre de polymère fluoré.

9. Courroie d'entraînement selon la revendication 8, **caractérisée en ce que** le polymère fluoré est le polytétrafluoroéthylène.

10. Courroie d'entraînement selon l'une des revendications précédentes, **caractérisée en ce que** le matériau réduisant le frottement est présent dans la matrice à raison de 40 à 60 % en poids.

11. Courroie d'entraînement selon l'une des revendications précédentes, **caractérisée en ce que** la courroie est une courroie crantée en caoutchouc.

12. Courroie d'entraînement selon la revendication 11, **caractérisée en ce que** l'armature de surface (5) est un tissu étirable en polyamide 6.6 appliqué sur les crans de la courroie.

13. Courroie d'entraînement selon la revendication 12, **caractérisée en ce que** dans la partie nervurée des crans de la courroie, le tissu est doté de 50 à 600g/m² et de préférence de 150 à 400 g/m² de revêtement de surface (6).
